(19) Europäisches Patentamt
European Patent Office
Office européen des brevets

(11) **EP 4 624 598 A1**

(12) **EUROPEAN PATENT APPLICATION**
published in accordance with Art. 153(4) EPC

(43) Date of publication:
01.10.2025 Bulletin 2025/40

(21) Application number: 23925379.2

(22) Date of filing: 15.11.2023

(51) International Patent Classification (IPC):
$C21D\ 9/60^{(2006.01)}$    $C21D\ 1/00^{(2006.01)}$
$C21D\ 1/26^{(2006.01)}$    $C21D\ 1/42^{(2006.01)}$
$C21D\ 11/00^{(2006.01)}$    $C22C\ 38/00^{(2006.01)}$
$C22C\ 38/60^{(2006.01)}$

(52) Cooperative Patent Classification (CPC):
C21D 1/00; C21D 1/26; C21D 1/42; C21D 9/60;
C21D 11/00; C22C 38/00; C22C 38/60

(86) International application number:
PCT/JP2023/041124

(87) International publication number:
WO 2024/180826 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.02.2023 JP 2023028934

(71) Applicant: JFE Steel Corporation
Tokyo 100-0011 (JP)

(72) Inventors:
• YAMASHIRO Kenji
Tokyo 100-0011 (JP)
• OSUKA Kenichi
Tokyo 100-0011 (JP)
• TAKEDA Gentaro
Tokyo 100-0011 (JP)

(74) Representative: Scott, Stephen John
YUJA IP LAW
4 Centenary House
The Avenue
York YO30 6AU (GB)

(54) **CONTINUOUS ANNEALING EQUIPMENT, CONTINUOUS ANNEALING METHOD, COLD-ROLLED STEEL SHEET MANUFACTURING METHOD, AND PLATED STEEL SHEET MANUFACTURING METHOD**

(57) Provided are a continuous annealing line, a continuous annealing method, a method of producing a cold-rolled steel sheet, and a method of producing a coated or plated steel sheet that can suppress occurrence of material property variation in the sheet transverse direction. The continuous annealing line is for a steel sheet, and includes a heating zone (6), a soaking zone (7), and a cooling zone (8), in this order. An induction heating device (9) is between the soaking zone and the cooling zone. A cooling device (13) cools edges of the steel sheet by gas at entry to the induction heating device. A control unit controls operating conditions of the induction heating device and the cooling device based on a phase fraction of the steel sheet downstream from the induction heating device.

*FIG. 1*

**Description**

TECHNICAL FIELD

The present disclosure relates to continuous annealing lines, continuous annealing methods, methods of producing cold-rolled steel sheets, and methods of producing coated or plated steel sheets. The present disclosure relates, in particular, to a continuous annealing line, a continuous annealing method, a method of producing a cold-rolled steel sheet, and a method of producing a coated or plated steel sheet for producing a high strength steel sheet used as automobile structural material and the like.

BACKGROUND

In the production of thin steel sheets for automobiles, continuously cast slabs are heavily processed by hot rolling and cold rolling until reaching final sheet thickness. In subsequent annealing treatment, cold work microstructure recovery, recrystallization, and grain growth, as well as transformation microstructure control, are carried out to adjust the balance between strength and workability.

In recent years, continuous annealing furnaces are typically used in annealing treatment, in which heating, soaking, and cooling are carried out continuously while conveying steel sheets connected as a continuous strip. Further, depending on steel sheet application, hot-dip galvanizing treatment, overaging treatment, and the like are carried out after the cooling.

In the production of thin steel sheets for automobiles, temperature control of steel sheets is very important to obtain desired material properties. For example, radiant tube burners are typically used as heaters in annealing furnaces, which use gas combustion to heat metal tubes (radiant tubes) and indirectly heat steel sheets with the radiant heat.

Radiant tube furnaces heat steel sheets by radiant heat from the radiant tubes and furnace wall, and therefore the volume of the heat source is very large and thermal inertia is large. This makes it difficult to quickly keep up with changes in temperature setting. Further, towards the end of heating, the temperature increase rate of steel sheets is slower and a certain amount of time for soaking is required for microstructure control, which increases the required furnace length and further increases thermal inertia, resulting in a greater delay in reaching a target temperature. As a result, in the process of continuously processing coils, a problem may occur in that temperature of a portion of a steel sheet does not fall within a defined annealing temperature range, which can cause problems such as lower yield rate due to variations in mechanical properties and lower productivity due to changes in line speed for temperature control.

In response to the above problems, an induction heating device may be installed to improve productivity and suppress material property variation. However, when steel sheets are heated by induction heating devices, there is a problem of overheating at edges of the steel sheets. To control overheating, for example, Patent Literature (PTL) 1 describes a technique of providing magnetic flux density mitigation means to mitigate magnetic flux concentrated at edges of a steel sheet when a solenoid-type induction heating device is used. For example, PTL 2 describes a technique of providing a cooler in an induction heating device that forcibly cools edges of a steel sheet. For example, PTL 3 describes a technique to equalize steel sheet temperature by taking into account an edge mask-specific temperature drop when using a transverse-type induction heating device.

CITATION LIST

Patent Literature

    PTL 1: JP H01-232685 A
    PTL 2: JP 2001-006860 A
    PTL 3: JP 2019-179733 A

SUMMARY

(Technical Problem)

The techniques of PTL 1 to 3 are only intended to achieve uniformity in steel sheet temperature after annealing. Although the techniques of PTL 1 to 3 may result in suppression of the effects of material property changes at edges of steel sheets due to overheating, there is a need to further suppress material property variation of steel sheets.

The method in PTL 1 suppresses overheating of edges of a steel sheet, but when applied to an annealing furnace, does not make the material uniform, including material property variation in the sheet transverse direction that has already occurred due to thermal history or processing history in the hot rolling process or cold rolling process prior to the annealing furnace.

Further, although the techniques of PTL 2 and PTL 3 are intended for application to an annealing furnace, the techniques do not make material properties uniform, including material property variation in the sheet transverse direction that has already occurred in processing prior to the annealing furnace.

In view of the above problems, it would be helpful to provide a continuous annealing line, a continuous annealing method, a method of producing a cold-rolled steel sheet, and a method of producing a coated or plated steel sheet that can suppress occurrence of material property variation in the sheet transverse direction.

(Solution to Problem)

(1) A continuous annealing line according to an embodiment of the present disclosure is
a continuous annealing line for a steel sheet, the continuous annealing line comprising a heating zone, a soaking zone, and a cooling zone, in this order, and further comprising:

an induction heating device disposed between the soaking zone and the cooling zone;
a cooling device configured to cool edges of the steel sheet by gas at entry to the induction heating device; and
a control unit configured to control operating conditions of the induction heating device and the cooling device based on a phase fraction of the steel sheet downstream from the induction heating device.

(2) The cold rolling method according to (1), as an embodiment of the present disclosure, wherein
the phase fraction is measured using a transformation rate meter downstream from the induction heating device.

(3) A continuous annealing method according to an embodiment of the present disclosure is
a continuous annealing method executed in a continuous annealing line for a steel sheet, the continuous annealing line comprising a heating zone, a soaking zone, and a cooling zone, in this order, the continuous annealing method comprising:

a step of rapid heating by an induction heating device disposed between the soaking zone and the cooling zone;
a step of cooling, by a cooling device, edges of the steel sheet at entry to the induction heating device; and
a step of controlling operating conditions of the induction heating device and the cooling device based on a phase fraction of the steel sheet downstream from the induction heating device.

(4) The continuous annealing method according to (3), as an embodiment of the present disclosure, wherein
the induction heating device heats the steel sheet at a rate of 10 °C/s or more and 200 °C/s or less.

(5) The continuous annealing method according to (3) or (4), as an embodiment of the present disclosure, wherein
the phase fraction is measured using a transformation rate meter downstream from the induction heating device.

(6) A method of producing a cold-rolled steel sheet according to an embodiment of the present disclosure, the method comprising
annealing the steel sheet, which is a cold-rolled steel sheet, by the continuous annealing method according to any one of (3) to (5).

(7) A method of producing a coated or plated steel sheet according to an embodiment of the present disclosure, the method comprising
a step of applying a coating or plating treatment to a surface of the steel sheet annealed by the method of producing a cold-rolled steel sheet according to (6).

(8) The method of producing a coated or plated steel sheet according to (7), as an embodiment of the present disclosure, wherein
the coating or plating treatment is electrogalvanization treatment, hot-dip galvanizing treatment, or galvannealing treatment.

(Advantageous Effect)

According to the present disclosure, a continuous annealing line, a continuous annealing method, a method of producing a cold-rolled steel sheet, and a method of producing a coated or plated steel sheet are provided that can suppress occurrence of material property variation in the sheet transverse direction.

BRIEF DESCRIPTION OF THE DRAWINGS

In the accompanying drawings:

FIG. 1 is a schematic diagram illustrating a schematic configuration of a continuous annealing line according to an embodiment of the present disclosure;
FIG. 2 is a schematic diagram illustrating another configuration of a continuous annealing line according to an embodiment of the present disclosure;
FIG. 3 is a schematic diagram illustrating arrangement of a cooling device and an induction heating device; and
FIG. 4 is a flowchart illustrating an example of a continuous annealing method.

DETAILED DESCRIPTION

Hereinafter, with reference to the drawings, a continuous annealing line, a continuous annealing method, a method of producing a cold-rolled steel sheet, and a method of producing a coated or plated steel sheet are described according to embodiments of the present disclosure. In each drawing, identical or equivalent parts are marked with the same reference sign. In description of the following embodiments, description of identical or equivalent parts is omitted or simplified as appropriate.

<Line configuration>

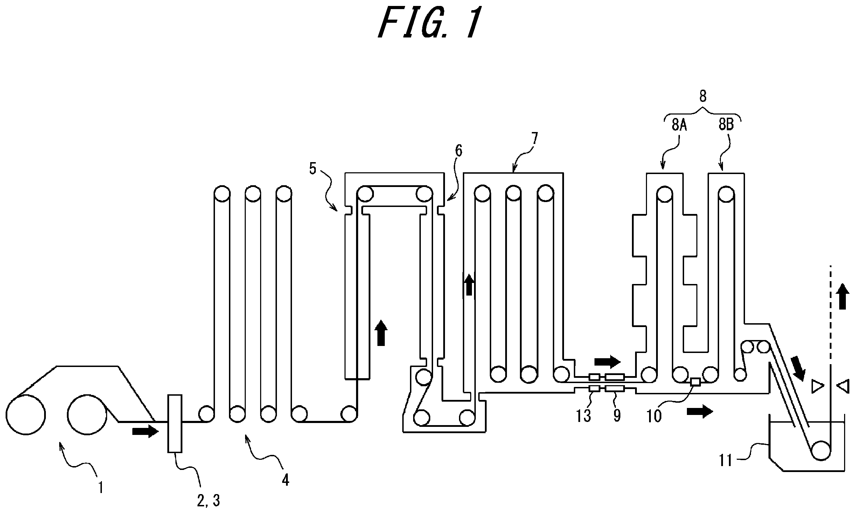

FIG. 1 illustrates a portion of a hot-dip galvanizing process provided with the continuous annealing line according to the present embodiment. According to the present embodiment, a steel material produced using the hot-dip galvanizing process is a thin steel sheet. Further, the steel material produced is a cold-rolled steel sheet. The arrows in FIG. 1 indicate the direction of line travel. Hereinafter, the upstream side in this direction of travel may be described as "before/previous" and the downstream side as "after/subsequent". The continuous annealing line includes a payoff reel 1, a welder 2, an electrolytic cleaning device 3, an entry-side looper 4, a preheating zone 5, a heating zone 6, a soaking zone 7, and a cooling zone 8. Further, the continuous annealing line includes an induction heating device 9 (hereinafter, also referred to as "IH"), a transformation rate meter 10, and a cooling device 13. The continuous annealing line includes at least one of the induction heating device 9. According to the present embodiment, the continuous annealing line includes at least one of the transformation rate meter 10. However, the continuous annealing line is not limited to a configuration that includes the transformation rate meter 10 as long as a phase fraction after annealing by the induction heating device 9 can be determined. For example, the continuous annealing line may be configured to predict a transformation rate based on information from an installed thermometer rather than the transformation rate meter 10. Further, the continuous annealing line includes at least one of the cooling device 13. According to the present embodiment, the cooling zone 8 includes a first cooling zone 8A and a second cooling zone 8B. The continuous annealing line may further include a galvanizing tank (zinc pot 11) into which a thin steel sheet cooled to a defined temperature is dipped, an alloying zone, a holding zone, a final cooling zone, a temper rolling mill, a delivery-side looper, a tension reel, and the like.

A thin steel sheet coiled in a previous process is uncoiled by the payoff reel 1. After passing through the preheating zone 5, the uncoiled thin steel sheet enters a continuous annealing furnace. The continuous annealing line includes the preheating zone 5 followed by the heating zone 6, the soaking zone 7, and the cooling zone 8, in this order. In the continuous annealing line, the induction heating device 9 is disposed between the soaking zone 7 and the cooling zone 8. Further, the continuous annealing line includes the transformation rate meter 10 downstream from the induction heating device 9. In the example in FIG. 1, the transformation rate meter 10 is disposed between the induction heating device 9 and the cooling zone 8, but the position is not limited as long as it is downstream from an outlet of the induction heating device 9.

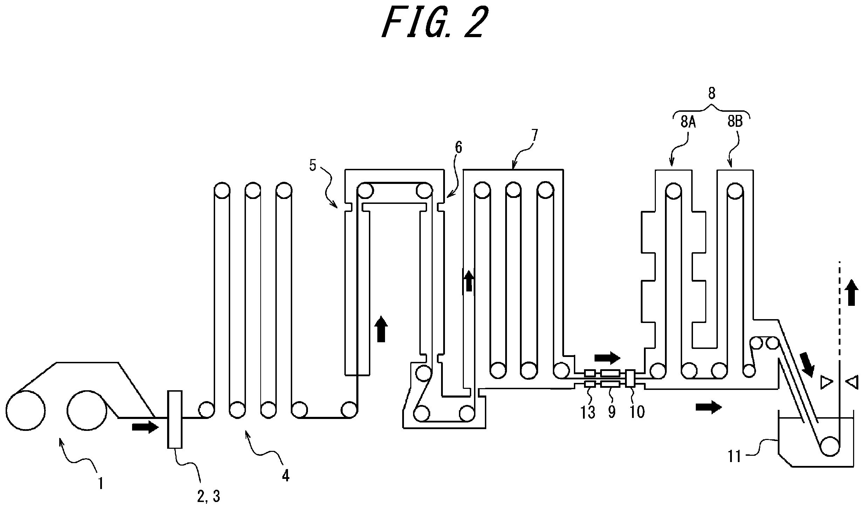

As in the example in FIG. 2, the transformation rate meter 10 may be disposed immediately after the induction heating device 9. Here, the transformation rate meter 10 is an example of a measuring device that measures an austenite fraction ($\gamma$-phase fraction) of a steel sheet. Further, In order to determine the austenite fraction, a thermometer may be installed in the sheet transverse direction in each annealing zone and a result predicted from steel sheet dimensions, actual composition, and the like. Here, the sheet transverse direction is the width direction of the steel sheet.

Further, the continuous annealing line includes a mechanism that adjusts output of the induction heating device 9 and output of the cooling device 13 using the result of the measurement of the $\gamma$-phase fraction by the transformation rate meter 10. The continuous annealing line may be configured to change other annealing line conditions, such as the furnace temperature of the soaking zone 7, as required. Here, the continuous annealing line according to the present embodiment is not limited to the configuration illustrated in FIG. 1, and may be varied according to a target quality of a steel sheet to be produced. For example, the continuous annealing furnace may be followed by the zinc pot 11 and an alloying zone or the like, the zinc pot 11 may be omitted, etc. Further, portions of the continuous annealing line may be subdivided. For example, the soaking zone 7 may be divided so that each portion of the divided soaking zone 7 controls the atmosphere or temperature independently.

(Preheating zone)

A thin steel sheet paid out from the payoff reel 1 at room temperature to about 100 °C first enters the preheating zone 5, to be heated to about 200 °C. According to the present embodiment, the preheating zone 5 uses high-temperature exhaust air produced in the heating zone 6.

(Heating zone)

The steel sheet then enters the heating zone 6, where steel sheet temperature is heated to about 600 °C to 700 °C. According to the present embodiment, in the heating zone 6, a direct flame heating furnace system is used to raise the temperature to a certain level in a short time and to control surface conditions. In addition to high heating capacity and small furnace volume, the direct flame heating furnace allows flexible control of the redox reaction at the steel sheet surface in consideration of a subsequent coating or plating process.

(Soaking zone)

The main role of the soaking zone 7 is to progress the recrystallization of $\alpha$-phase. However, at this time, it is acceptable if some portions pass through the $A_1$ transformation temperature. It is desirable to use a radiant heating (radiant tube heating) system by gas combustion as the heating system of the soaking zone 7, due to high efficiency and heating uniformity. The soaking zone 7 may be configured as a large single furnace shell. Further, the soaking zone 7 may be configured to have two or more compartments, with each compartment separated by a thermal barrier or the like, to hold and heat in a target temperature range determined for each compartment. According to the present embodiment, the soaking zone 7 holds or carries out slow heating so that the temperature of the steel sheet is in a temperature range lower than the $A_1$ transformation temperature (about 600 °C to 730 °C) to secure residence time in the recrystallization temperature range and to suppress residual unrecrystallized $\alpha$-phase. Here, the $A_1$ transformation temperature is the temperature at which austenite transformation occurs, and as an example, the set furnace temperature is 730 °C. In other words, austenite phase begins to develop at temperatures equal to or greater than the $A_1$ transformation temperature.

Here, when the temperature of the steel sheet in the soaking zone 7 is too low, $\alpha$-phase recrystallization does not progress and sufficient workability is not obtainable. On the other hand, when the temperature of the steel sheet in the soaking zone 7 is the $A_1$ transformation temperature or more, $\alpha$-phase recrystallization grains become coarse and strength becomes insufficient. The $A_1$ transformation temperature may vary slightly depending on the composition of the steel sheet. Therefore, the recrystallization temperature range is preferably predicted in advance by measurement, calculation, or simulation, and set taking into consideration the error range during annealing.

Although the continuous annealing line according to the present embodiment includes the soaking zone 7 using a radiant tube furnace, a configuration without such a soaking zone 7 is possible as long as the configuration has the function of securing enough hold time to allow $\alpha$-phase recrystallization to proceed. For example, the soaking zone 7 is not limited to including a radiant tube furnace. Further, the continuous annealing line may be configured without the soaking zone 7 and the heating zone 6 may have the ability to secure enough hold time to allow $\alpha$-phase recrystallization to proceed. Further, the continuous annealing line may include a holding device in place of the soaking zone 7. When the continuous annealing line does not include the soaking zone 7, the induction heating device 9 may be disposed between the portion that has the function of the soaking zone 7 (in the above example, the portion that secures hold time in the heating zone 6 or the holding device) and the cooling zone 8.

(Induction heating device)

Next, the induction heating device 9 rapidly heats the steel sheet by adjusting output so that the temperature of the steel sheet is in a temperature range from the $A_1$ transformation temperature to less than the $A_3$ transformation temperature (about 750 °C to 900 °C). Here, the $A_3$ transformation temperature is an upper limit temperature at which the $\gamma$-phase fraction can be controlled. The objective of this process is to uniformly raise the temperature of the entire steel sheet to the $A_1$ transformation temperature or more in a short time so that the same $\gamma$-phase fraction is obtained at any location on the steel sheet. The use of the induction heating device 9 may also contribute to downsizing the line overall. Here, the $A_1$ transformation temperature and the $A_3$ transformation temperature may vary slightly depending on the composition of the steel sheet. Therefore, an appropriate temperature range is preferably predicted in advance by measurement, calculation, or simulation, and set taking into consideration the error range during annealing.

In DP steel, which is one of the targets of the continuous annealing line according to the present embodiment, end-point temperature in the induction heating device 9 has a large effect on mechanical properties of the final product.

Therefore, the heating system of the induction heating device 9 needs to have a fast response to temperature control commands. Further, when heating in such a temperature range, the temperature exceeds the Curie point at which magnetic properties of the steel sheet change, and therefore the induction heating device 9 is preferably a transverse flux type.

Further, in the soaking zone 7, the $\alpha$-phase recrystallization temperature range is held, and therefore when heating takes too long this may lead to coarsening of $\alpha$-grains. For this reason, the induction heating device 9 is preferably capable of rapid heating. The induction heating device 9 may heat at a rate of 10 °C/s or more and 200 °C/s or less. When less than 10 °C/s, coarsening of $\alpha$-grains occurs, and when greater than 200 °C/s, localized high-temperature areas occur in the sheet transverse direction and uniformity is not maintained. The induction heating device 9 more preferably heats at a rate of 20 °C/s or more. The induction heating device 9 more preferably heats at a rate of 100 °C/s or less. When the heating rate is 20 °C/s or more, the line length can be shorter, and when the heating rate is 100 °C/s or less, the risk of buckling deformation of the steel sheet due to thermal stress can be further decreased.

When the induction heating device 9 is used to rapidly heat to the target annealing temperature, it can happen that transformation from $\alpha$-phase to $\gamma$-phase has not yet reached equilibrium immediately after heating. However, when held too long in the vicinity of the target annealing temperature, the transformation from the $\alpha$-phase to the $\gamma$-phase progresses more than necessary, resulting in hardening, and a required elongation in the final product cannot be obtained. Therefore, after reaching the target annealing temperature, it is most desirable to enter the cooling zone 8 as quickly as possible with a hold time of 0 s, and cooling preferably starts in 5 s or less. To avoid non-equilibrium, even when held, cooling is started in 10 s or less at the latest. That is, cooling of the steel sheet starts in the cooling zone 8 in 10 s or less after the heating by the induction heating device 9 is completed.

To satisfy these conditions, the induction heating device 9 is disposed between the soaking zone 7 and the cooling zone 8. For example, when the induction heating device 9 is disposed at a connecting portion between the soaking zone 7 and the cooling zone 8, it is possible to add the induction heating device 9 to an existing furnace.

Further, two or more of the induction heating device 9 may be provided when the soaking zone 7 is a split type. For example, the soaking zone 7 may be divided into two compartments, with the upstream compartment holding in the recrystallization zone and the downstream compartment holding in the high temperature zone, to promote reduction reactions on the steel sheet surface. There is a difference in the optimum temperature range for each compartment, and therefore a first induction heating device 9 may be disposed to rapidly heat from the low temperature compartment to the high temperature compartment, and a second induction heating device 9 for temperature adjustment for material property control may be disposed just before entry to the cooling zone 8.

(Cooling device)

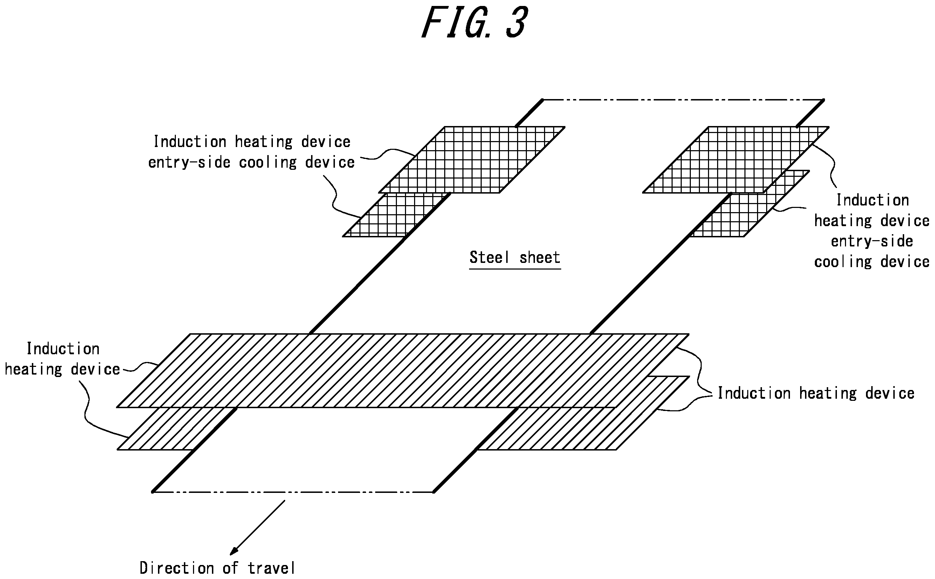

When a steel sheet is heated by the induction heating device 9, eddy current generated in the steel sheet has a tendency to concentrate at both ends (edges) in the sheet transverse direction. Therefore, the ends in the sheet transverse direction are known to be hotter than the center portion. To equalize the temperature of the steel sheet after heating in the sheet transverse direction, the cooling device 13 is disposed at the entry side of the induction heating device 9 to pre-cool both ends of the steel sheet, as illustrated in FIG. 3.

The cooling device 13 is preferably a gas jet cooling device. According to the present embodiment, the cooling device 13 cools the ends of the steel sheet by gas. The cooling device 13 includes nozzles, and the nozzles may be mounted on both front and back sides facing each other across the steel sheet so that gas is sprayed against both sides (front and back) of the ends of the steel sheet.

Ranges where overtemperature occurs are about 200 mm to 300 mm inward from each end of the steel sheet in the sheet transverse direction. The nozzle mounting is therefore not limited to a specific configuration, as long as the nozzles can be positioned so that these ranges can be specifically cooled. Here, it is more preferable to determine a cooling range so that the material property variation is within a target range across the entire sheet transverse direction according to a transformation rate distribution in the sheet transverse direction measured using the transformation rate meter 10. Preferably, a plurality of the cooling device 13 is disposed along the sheet transverse direction so that the cooling range can be changed.

The nozzles of the cooling device 13 may be slit nozzles that have slits extending in the sheet transverse direction, or nozzles that have small holes in the nozzle header extending in the sheet transverse direction. Slit thickness may be any width from 1 mm to 5 mm, for example. Small holes may be any diameter in a range from 1 mm to 20 mm, for example. When a single nozzle does not provide sufficient cooling, multiple stages of nozzles may be provided. Non-oxidizing gas (such as $N_2$, $H_2$, or a mixed gas of these) is preferred as a cooling gas. The cooling gas is preferably drawn in from outside the furnace, and is not high temperature furnace gas.

Further, the cooling capacity of the cooling device 13 may be determined based on the steel sheet passing speed, the dimensions of the steel sheet, and the specifications of the induction heating device 9. The cooling device 13 preferably has a cooling performance that can achieve 50 W/(m²·K) to 500 W/(m²·K) in heat transfer coefficient. When the heat transfer coefficient exceeds 500 W/($m^2 \cdot$K), the steel sheet may lose shape, causing problems during transport.

Here, when the distance separating the cooling device 13 and the induction heating device 9 is far, the steel sheet is heated by the ambient atmosphere from the cooling device 13 to the induction heating device 9. As a result, the temperature distribution on delivery from the induction heating device 9 is not uniform, causing the material property to vary in the transverse direction. The heat transfer coefficient for heating by forced convection of the furnace atmosphere is estimated to be roughly 20 W/($m^2 \cdot$K). Assuming a sheet passing speed of 100 mpm and a sheet thickness of 1 mm, the temperature increase at the soaking zone delivery is about 5 °C at a distance of 4 m and 10 °C at 8 m. From the above, from the viewpoint of uniform temperature variation in the transverse direction, the distance from delivery from the cooling device 13 to entry to the induction heating device 9 is preferably 8 m or less. The distance is more preferably 4 m or less.

(Transformation rate meter)

The transformation rate meter 10 that measures a phase fraction of the steel sheet is disposed downstream from the induction heating device 9, and phase fractions (transformation rate) of the $\alpha$-phase and $\gamma$-phase of the steel sheet after reaching the target annealing temperature are measured. The transformation rate meter 10 is provided for the purpose of adjusting the operating conditions of the induction heating device 9 and the cooling device 13 based on the measured $\gamma$-phase fraction. By adjusting in this way, mechanical properties of the steel sheet can be stably obtained. The position of the transformation rate meter 10 is not particularly limited as long as the transformation rate meter 10 is downstream from the induction heating device 9. However, from the viewpoint of using a measured value as feedback for controlling the induction heating device 9 and the like, closer to the induction heating device 9 is desirable. From this perspective, the transformation rate meter 10 is preferably disposed upstream of the cooling zone. However, disposition of the transformation rate meter 10 needs to take into account heat resistance of the transformation rate meter 10. For quicker feedback, the transformation rate meter 10 is more preferably disposed between the exit of the induction heating device 9 and the entrance of the cooling zone 8.

Here, the method of measuring the transformation rate is not particularly limited. For example, the austenite fraction may be measured using a magnetic detector, that is, a magnetic transformation rate measuring device for measuring the magnetic transformation rate of a steel strip, including a drive coil that generates a magnetic field and a detection coil that measures the magnetic field that passes through the steel strip. Specifically, a device described in JP 2019-007907 A may be used. However, in the case of a magnetic transformation rate measuring device, when the transformation rate meter 10 is disposed near the induction heating device 9, measurement precision may be affected by the magnetic field. As a technique that is not affected by magnetic fields, a device that applies X-ray diffraction may be used. Due to the difference in crystal structure, $\gamma$-phase and $\alpha$-phase generate diffraction peaks at different specific angles when the steel sheet is irradiated with X-rays. The $\gamma$-phase fraction can be quantified by this diffraction peak intensity. Commercially available products include, for example, X-CAP, produced by SMS Co., Ltd.

The transformation rate is preferably measured so that a phase fraction distribution in the sheet transverse direction is obtained. When measuring the phase fraction distribution in the sheet transverse direction is difficult, at least three locations may be measured, including a sheet width central portion and both sheet width edges. The sheet width central portion is a central portion along the steel sheet transverse direction, and may be the center of the steel sheet. The sheet width edges are portions of the steel sheet in the vicinity of the edges in the sheet transverse direction. Measurement positions at the sheet width edges are not limited to a specific location, but at least one location in a range of 25 mm to 100 mm inward from the edge of each steel sheet needs to be measured.

Here, as mentioned above, the method of determining the transformation rate is not limited to measurement by the transformation rate meter 10. As other methods, predicted values of phase fractions may be used, such as by calculation using a machine learning model or a physics model. In this case, it is desirable to place a thermometer inside the annealing furnace as appropriate to improve precision of the prediction model.

(Cooling zone)

The cooling zone 8 is apparatus that cools a steel sheet to a defined temperature, and may use gas jet cooling, roll-chilling, water cooling (water quenching), or the like as cooling. As in the present embodiment, the cooling zone 8 may be divided into a plurality of zones, such as the first cooling zone 8A and the second cooling zone 8B, and the thermal history of a steel sheet during cooling may be controlled by combining different cooling or by changing cooling conditions of the same type of cooling. Further, when the cooling zone is divided, the transformation rate meter 10 may be disposed in the divided portion.

(Hot-dip galvanizing bath)

A hot-dip galvanizing bath may follow the cooling zone 8 to apply hot-dip galvanized coating to a surfaces of the steel sheet delivered from the cooling zone 8. Hot-dip galvanizing may be carried out according to a conventional method, and a snout, an in-bath roller, and the like may be included as required.

(Alloying line)

An alloying treatment line may be included following the hot-dip galvanizing bath. In the alloying treatment line, a steel sheet is heated and alloying treatment is applied. The alloying treatment may be carried out according to a conventional method.

(Other apparatus)

Following the alloying line, a holding zone, a final cooling zone, a temper rolling mill, a straightener, a delivery-side looper, a tension reel, and the like may be further included to improve final product quality and to improve production stability and efficiency. Such apparatus may be included and used according to the quality required for the product and is not limited in any particular way. Further, when shape defect occurs, straightening may be carried out by passing the sheet through the temper rolling mill and the straightener. The temper rolling and straightening may be carried out under conditions that allow shape straightening without affecting the mechanical properties of the steel sheet.

<Operating method (control method)>

According to the present embodiment, an optimal range of phase fractions for each product is known in advance to construct a "transformation rate control model", and the output of the induction heating device 9 or the cooling device 13 is controlled so that the phase fractions measured by the transformation rate meter 10 fall within a target range. Further, according to the present embodiment, other annealing line conditions, such as the furnace temperature of the soaking zone 7, are also controlled as required. Compared to a method of simply equalizing steel sheet temperature during annealing in the sheet transverse direction, this further reduces material property variation in the sheet transverse direction and makes it possible to produce a product that has very stable mechanical properties.

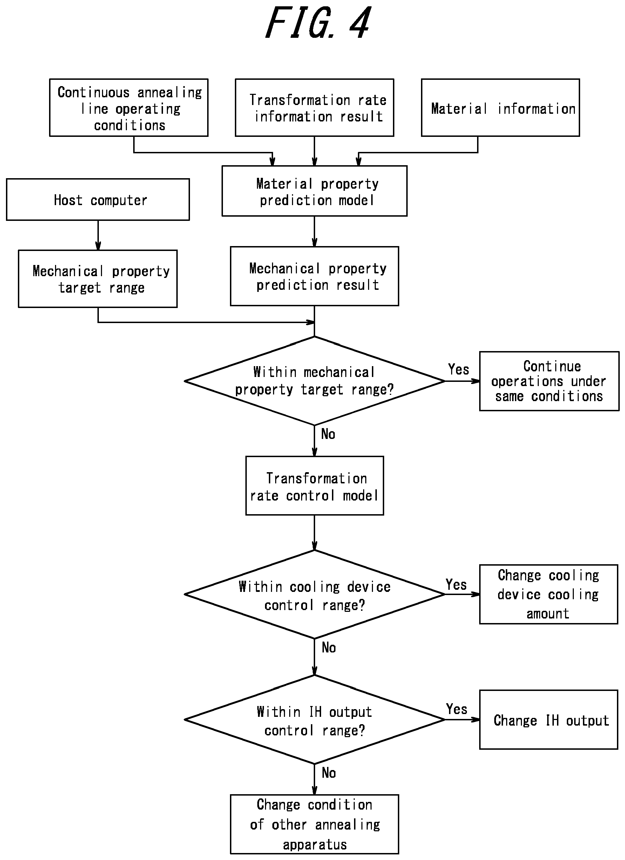

FIG. 4 is a flowchart illustrating an example of a continuous annealing method carried out by the continuous annealing line according to the present embodiment. The continuous annealing method may be carried out by a control unit associated with the continuous annealing line, represented by a process computer that accumulates and manages operating condition results.

The phase fraction of the steel sheet that has passed through the induction heating device 9 is obtained as a "transformation rate information result". The phase fraction may be a measured value or a predicted value. Further, information on chemical composition obtained when material is cast, sheet thickness, sheet width, and other dimensions of the steel sheet is acquired as "material information". Other production conditions of the passing process may be obtained as material information. Further, information such as line speed of the steel sheet during annealing, set furnace temperature, atmospheric gas in the furnace, and cooling conditions are obtained as "operating conditions of the continuous annealing line". Based on this information, a mechanical property (mechanical characteristic) of the final product is predicted using a "material property prediction model". The material property prediction model may be a physical model obtained by off-line experiments or numerical analysis. The material property prediction model may be a machine learning model generated by machine learning using accumulated production results as training data.

Next, whether the predicted mechanical property derived from the material property prediction model falls within a mechanical property target range acceptable for the product is determined. The mechanical property target range is provided by a host computer. The host computer is a computer that provides production information and the like to a process computer that controls the operation of the continuous annealing line. When within the target range ("Within mechanical property target range?" is Yes in FIG. 4), the continuous annealing line continues operation under the current conditions (that is, under the same conditions). When outside the target range ("Within mechanical property target range?" is No in FIG. 4), the continuous annealing line changes an operating condition. In changing the operating condition, a "transformation rate control model" is used to determine an amount of phase fraction adjustment required to keep the material property within the target range from the material property prediction model, and to determine the amount of steel sheet temperature control to achieve a transformation rate adjustment. The "transformation rate control model" may be a physical model obtained from off-line laboratory experiments or numerical analysis, and may be a machine learning model obtained from accumulated production results. Here, the $\gamma$-phase is suitable as the metallic phase to be adjusted.

When determining that a required steel sheet temperature control amount is within a controllable range of the cooling device 13 at the entry side of the induction heating device 9 ("Within cooling device control range?" is Yes in FIG. 4), the continuous annealing line changes the cooling amount by changing only the output of the cooling device 13 ("Change cooling device cooling amount" in FIG. 4). When determining that the required steel sheet temperature control amount is not within the controllable range of the cooling device 13 ("Within cooling device control range?" is No in FIG. 4), the continuous annealing line also changes a condition of the induction heating device 9.

When determining that the required steel sheet temperature control amount is within a range controllable by the induction heating device 9 ("Within IH output control range?" is Yes in FIG. 4), the continuous annealing line changes the output of the induction heating device 9. When determining that the required steel sheet temperature control amount is not within the range controllable by the induction heating device 9 ("Within IH output control range?" is No in FIG. 4), the continuous annealing line also changes a condition of apparatus other than the cooling device 13 and the induction heating device 9 ("Change condition of other annealing apparatus" in FIG. 4). Here, other annealing apparatus refers to the soaking zone 7, the cooling zone 8, or the like. The other annealing apparatus is less responsive to changes in operating conditions than the induction heating device 9, but by controlling the apparatus in combination with the induction heating device 9 via the above control flow from moment to moment even while the conditions are changing, it is possible to minimize the amount by which the mechanical property of the product deviates from the target.

With respect to the above cooling amount, when a predicted difference occurs in the steel sheet temperature in the sheet transverse direction at the completion of annealing, predicted based on the transformation rate distribution in the sheet transverse direction, the cooling device 13 imparts a temperature difference in advance between the sheet width edges and the sheet width central portion to cancel out the predicted difference. The amount of cooling to impart a temperature difference is determined by the following method.

For example, suppose that a steel sheet that has a temperature of $T_1$ has a temperature of $T_2$ at the sheet width central portion and a temperature of $T_3$ at the sheet width edges due to passing through the induction heating device 9. That is, $\Delta Tc$, an amount of temperature increase at the sheet width central portion, is $T_2 - T_1$. Further, $\Delta T_E$, an amount of temperature increase at the sheet width edges, is $T_3 - T_1$. In this case, $\Delta T_E$ and $\Delta T_C$ have the relationship in the following Expression (1).

[Math. 1]

$$\Delta T_E = \alpha \Delta T_C \qquad ...\text{Expression (1)}$$

When the induction heating device 9 is not provided with a way to suppress overheating of the sheet width edges, such as an edge mask, $\alpha$ is approximately 2. The value of $\alpha$ may be determined empirically, for example, through laboratory experiments, accumulation of production conditions and results, and the like. When the induction heating device 9 increases the temperature at the sheet width central portion by 100 °C ($\Delta T_C$ is 100 °C), the temperature at the sheet width edges is further increased by about 100 °C compared to the sheet width central portion ($\Delta T_E$ is about 200 °C). Therefore, just before the steel sheet is transported to the induction heating device 9, the sheet width edges may be cooled by the cooling device 13 by the amount that cancels out the temperature difference (about 100 °C in this example). $T_{EA}$, a temperature at the sheet width edges after passing through the cooling device 13, has the relationship in the following Expression (2).

[Math. 2]

$$\frac{T_{EA}-T_S}{T_{EB}-T_S} = exp\left(-\frac{hS}{c\rho V}t\right) \qquad ...\text{Expression (2)}$$

Here, $T_S$ is the temperature of the cooling gas. $T_{EA}$ is the temperature at the sheet width edges after passing through the cooling device 13. $T_{EB}$ is the temperature at the sheet width edges before passing through the cooling device 13. h is the heat transfer coefficient (W/(m²·K)) of gas cooling. S is the surface area (m²) of the steel sheet in the cooling device 13. c is the specific heat (J/(kg·K)) of the steel sheet. $\rho$ is the density (kg/m³) of the steel sheet. V is the volume (m³) of the steel sheet in the cooling device 13. t is the time (s) that the steel sheet passes through the cooling device 13.

In the case of 100 °C cooling of the sheet width edges, Expression (2) and information on line speed, specific heat, density of the steel sheet, and the like are used to calculate the cooling conditions under which, for example, $T_{EB}$, the temperature at the sheet width edges before cooling, is assumed to be 800 °C, and $T_{EA}$ becomes 700 °C.

Here, the amount of cooling can be changed by controlling the temperature or flow rate of the gas used for cooling. Methods to change the cooling rate are not limited, but in particular, controlling the flow rate by changing the gas jet pressure is preferred. As a specific example, the relationship between the heat transfer coefficient of the cooling device and controllable parameters (for example, gas flow rate or pressure) may be obtained in advance and tabulated, and the control parameters of the cooling device 13 may be changed to obtain the target cooling amount at the sheet width edges. Material property uniformity is secured when a magnitude of variation of the $\gamma$-fraction, for example, is within a range of 10 % at all positions in the transverse direction of the steel sheet.

Here, for example, reference literature (JP H07-41868 A) describes a structure in which, as a method to control overheating of steel sheet edges, cooling tubes that pass air or water as coolant are disposed on the inner surface of the furnace wall in the heating furnace of a non-oxidizing furnace system using a flame burner. With such indirect cooling, it takes time for the temperature of the fluid in the furnace to change, even when cooling conditions, such as the flow rate of the coolant, are changed. Therefore, it takes some time to reach the target sheet temperature when the heat capacity of the sheet changes, such as when the sheet passing speed is changed or the sheet thickness is switched. In contrast, in the direct gas cooling according to the present disclosure, changes in cooling conditions directly lead to changes in steel sheet temperature. Therefore, it is possible to immediately respond to any unsteady changes in heat capacity, enabling stable control of sheet temperature at the steel sheet edges and production of a high-quality steel sheet that has no material property variation in the transverse direction.

(Target material)

The continuous annealing line according to the present embodiment anneals steel material, including DP steel, to stably obtain a target mechanical property. As a specific example, a target steel sheet may contain, in mass%: C from 0.05 % to 0.25 %, Si from 0.01 % to 2.00 %, Mn from 0.50 % to 4.00 %, P up to 0.100 %, S up to 0.0500 %, Sol.Al from 0.005 % to 0.100 %, N up to 0.100 %, and, as required, Cr, Cu, Ni, Sb, Sn (each up to 1.00 %), Mo, V, Ti, Nb (each up to 0.50 %), Ta (up to 0.10 %), Mg, Zr (each up to 0.050 %), B, Ca, REM (each up to 0.0050 %), with the balance being Fe and inevitable impurity. However, as long as there is a need to control a two-phase microstructure of $\alpha$-phase and $\gamma$-phase, target steel sheets are not limited.

EXAMPLES

Table 1 lists conditions and results of thin steel sheet production using a conventional continuous annealing line and the continuous annealing line according to the present embodiment (see FIG. 1 and FIG. 2). For Comparative Example 1, Comparative Example 2, Example 1, and Example 2, three strength levels of 780 MPa, 980 MPa, and 1180 MPa grades were produced, and for each strength level, ten slabs were produced for each of three different thicknesses: 1.0 mm, 1.5 mm, and 2.0 mm. The ten slabs of each grade and thickness were each cast in different lots in a continuous casting machine. As a result, although within a production control range, the chemical composition of each slab varied and transformation behavior was not uniform.

[Table 1]

(Table 1)

| | Induction heating device | Cooling system at entry side of induction heating device | Transformation rate meter | | Thickness [mm] | Line speed [mpm] | Grade | Cooling zone entry steel sheet temperature | | TS variation | |
|---|---|---|---|---|---|---|---|---|---|---|---|
| | | | Yes or no (Position) | Measurement location | | | | Sheet width central portion [°C] | Sheet width edges [°C] | Sheet width central portion [MPa] | Sheet width edges [MPa] |
| Comparative Example 1 | No | No | No | - | 1.0, 1.5, 2.0 | 60 to 120 | 780 MPa | 770 to 830 | 780 to 840 | 775 to 900 | 750 to 875 |
| | | | | | | | 980 MPa | 770 to 830 | 780 to 840 | 970 to 1100 | 945 to 1075 |
| | | | | | | | 1180 MPa | 800 to 860 | 810 to 870 | 1170 to 1300 | 1145 to 1275 |
| Comparative Example 2 | Yes | No | Yes (middle portion of cooling zone) | Sheet width central portion | 1.0, 1.5, 2.0 | 60 to 120 | 780 MPa | 770 to 830 | 800 to 950 | 785 to 810 | 635 to 795 |
| | | | | | | | 980 MPa | 770 to 830 | 800 to 950 | 985 to 1010 | 835 to 995 |
| | | | | | | | 1180 MPa | 800 to 860 | 850 to 1000 | 1185 to 1220 | 1035 to 1195 |
| Example 1 | Yes | Yes | Yes (middle portion of cooling zone) | Sheet width central portion and sheet width edges | 1.0, 1.5, 2.0 | 60 to 120 | 780 MPa | 770 to 830 | 775 to 835 | 785 to 810 | 785 to 810 |
| | | | | | | | 980 MPa | 770 to 830 | 775 to 835 | 985 to 1010 | 985 to 1010 |
| | | | | | | | 1180 MPa | 800 to 860 | 805 to 865 | 1185 to 1220 | 1185 to 1220 |
| Example 2 | Yes | Yes | Yes (immediately after induction heating device) | Sheet width central portion and sheet width edges | 1.0, 1.5, 2.0 | 60 to 120 | 780 MPa | 770 to 830 | 775 to 835 | 785 to 805 | 785 to 805 |
| | | | | | | | 980 MPa | 770 to 830 | 775 to 835 | 985 to 1005 | 985 to 1005 |
| | | | | | | | 1180 MPa | 800 to 860 | 805 to 865 | 1185 to 1215 | 1185 to 1215 |

Each slab was subjected to hot rolling and pickling using typical methods, annealing and cold rolling where required, and then heat-treated, by a conventional continuous annealing line or the continuous annealing line according to the present disclosure, followed by cooling, coating or plating, and other post-treatment. After selecting three arbitrary locations in the steel sheet transport direction (rolling direction) of a final product coil, tensile test pieces were taken at three locations: at the sheet width central portion and at both sheet width edges (50 mm from both edges toward the center), and a mechanical property was measured. In other words, a total of nine test pieces per final product coil were taken and measured for the mechanical property. Here, each tensile test piece was a JIS No. 5 tensile test piece. Tensile testing was carried out according to JIS Z2241. The material property was judged to be stable when the magnitude of variation in tensile strength (TS) measured by tensile testing was within a range of 60 MPa, and material property was judged to be variable when the range was greater than -30 MPa to +30 MPa. Further, in the 780 MPa, 980 MPa, and 1180 MPa grades, the required strength ranges were 780 MPa or more, 980 MPa or more, and 1180 MPa or more, respectively.

Comparative Example 1 was produced from the material described above using a conventional annealing furnace including the preheating zone 5, the heating zone 6, and the soaking zone 7, without the induction heating device 9 or the transformation rate meter 10. Line speed in production ranged from 60 mpm to 120 mpm, and changes in steel sheet temperature were controlled according to sheet thickness. Steel sheet temperature at the exit from the heating zone 6 (direct flame heating) was kept in the range from 600 °C to 700 °C to control the surface redox reaction. The steel sheet was then further heated in a radiant tube-type soaking zone 7. The steel sheet temperature at the exit from the soaking zone 7 (entry to the cooling zone 8) was in a range from 770 °C to 870 °C. The furnace temperature of the soaking zone 7 was controlled so that the steel sheet temperature at the exit was at a target value. Some material test pieces were then taken from the final product after cooling, hot-dip galvanizing, alloying treatment, and the like, to investigate variations in mechanical properties. As a result, tensile strength varied greatly within each grade, with some falling below the lower limit for each grade. This is presumably due to the phase fraction during annealing not reaching the targeted value due to variation in the chemical composition of the material, and when annealing conditions changed at the joints between coils of different thicknesses and grades, there were portions where the heating conditions could not keep up.

Comparative Example 2 is the result of using the continuous annealing line illustrated in FIG. 1, but without using the cooling device 13 to produce the product. Therefore, in Table 1, "No" is indicated for cooling device. Here, the transformation rate meter 10 was disposed in the middle of the cooling zone 8, that is, between the first cooling zone 8A and the second cooling zone 8B. The sheet passing speed and the exit temperature of the heating zone 6 were controlled within the same range as for Comparative Example 1. However, the phase fraction at the sheet width central portion during annealing was measured by the transformation rate meter 10 at the exit of the cooling zone 8, and the output of the induction heating device 9 and the furnace temperature of the soaking zone 7 were controlled. Due to active control of the phase fraction, the variation of the mechanical property in the sheet width central portion of the product was greatly improved. However, the cooling device 13 was not used, and therefore the induction heating device 9 caused overheating at the sheet width edges, and the material property variation at the sheet width edges was larger than in Comparative Example 1.

Example 1 is the result of using the continuous annealing line illustrated in FIG. 1, using the cooling device 13 to produce the product. Here, the transformation rate meter 10 was disposed in the middle of the cooling zone 8, that is, between the first cooling zone 8A and the second cooling zone 8B. The phase fractions at the sheet width central portion and at the sheet width edges were measured by the transformation rate meter 10, and the output of the induction heating device 9, the furnace temperature of the soaking zone 7, and the cooling amount of the cooling device 13 at the entry side of the induction heating device 9 were controlled according to the control flow illustrated in FIG. 4. Based on the measured phase fraction at the sheet width edges, the appropriate amount of cooling by the cooling device 13 could be set, and the material property variation was greatly improved both at the sheet width central portion and at the sheet width edges. Further, the material property variation at the sheet width edges was similar to the material property variation at the sheet width central portion.

Example 2 is the result of using the continuous annealing line illustrated in FIG. 2, using the cooling device 13 to produce the product. Here, the transformation rate meter 10 was disposed immediately after the induction heating device 9. The phase fractions at the sheet width central portion and at the sheet width edges were measured by the transformation rate meter 10, and the output of the induction heating device 9, the furnace temperature of the soaking zone 7, and the cooling amount of the cooling device 13 at the entry side of the induction heating device 9 were controlled. Based on the measured phase fraction at the sheet width edges, the appropriate amount of cooling by the cooling device 13 could be set, and the material property variation was greatly improved both at the sheet width central portion and at the sheet width edges. The material property variation at the sheet width edges was similar to the material property variation at the sheet width central portion. Further, by positioning the transformation rate meter 10 immediately after the induction heating device 9, it was possible to measure the γ-fraction closer to the end of the annealing, which allowed for quicker correction of operating conditions. Therefore, material property variation was decreased compared to Example 1.

As described above, the continuous annealing line, the continuous annealing method, the method of producing a cold-rolled steel sheet, and the method of producing a coated or plated steel sheet according to the present embodiments can, due to the configurations described above, suppress occurrence of material property variation in the sheet transverse direction. Further, the continuous annealing line according to the present embodiments can be expected to decrease the introduction cost of production lines because the line length can be decreased compared to a conventional line due to use of the induction heating device 9 that has a high heating capacity and a fast response to temperature control.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and a plurality of components and steps may be combined into one or divided, as long as no logical inconsistency results. An embodiment according to the present disclosure may be realized as a program executed by a processor provided to a device or as a storage medium on which the program is stored. The scope of the present disclosure should be understood to include these examples.

According to an embodiment described above, the zinc pot 11 was described as a galvanizing tank in which a thin steel sheet is dipped, but another coating or plating treatment may be carried out. The coating or plating treatment may be, for example, electro galvanization treatment, hot-dip galvanizing treatment, or galvannealing treatment.

For example, a program stored in a storage (for example, memory) of a process computer may be read and executed by the processor of the process computer to execute processing such as controlling the output of the induction heating device 9, the furnace temperature of the soaking zone 7, and the cooling amount of the cooling device 13. That is, the processor of the process computer may function as the control unit described above via a program.

REFERENCE SIGNS LIST

1    payoff reel
2    welder
3    electrolytic cleaning device
4    entry-side looper
5    preheating zone
6    heating zone
7    soaking zone
8    cooling zone
8A    first cooling zone
8B    second cooling zone
9    induction heating device
10    transformation rate meter
11    zinc pot
13    cooling device

**Claims**

1.  A continuous annealing line for a steel sheet, the continuous annealing line comprising a heating zone, a soaking zone, and a cooling zone, in this order, and further comprising:

    an induction heating device disposed between the soaking zone and the cooling zone;
    a cooling device configured to cool edges of the steel sheet by gas at entry to the induction heating device; and
    a control unit configured to control operating conditions of the induction heating device and the cooling device based on a phase fraction of the steel sheet downstream from the induction heating device.

2.  The continuous annealing line according to claim 1, wherein the phase fraction is measured using a transformation rate meter downstream from the induction heating device.

3.  A continuous annealing method executed in a continuous annealing line for a steel sheet, the continuous annealing line comprising a heating zone, a soaking zone, and a cooling zone, in this order, the continuous annealing method comprising:

    a step of rapid heating by an induction heating device disposed between the soaking zone and the cooling zone;
    a step of cooling, by a cooling device, edges of the steel sheet at entry to the induction heating device; and

a step of controlling operating conditions of the induction heating device and the cooling device based on a phase fraction of the steel sheet downstream from the induction heating device.

4. The continuous annealing method according to claim 3, wherein the induction heater heats the steel sheet at a rate of 10 °C/s or more and 200 °C/s or less.

5. The continuous annealing method according to claim 3 or 4, wherein the phase fraction is measured using a transformation rate meter downstream from the induction heating device.

6. A method of producing a cold-rolled steel sheet, the method comprising annealing the steel sheet, which is a cold-rolled steel sheet, by the continuous annealing method according to any one of claims 3 to 5.

7. A method of producing a coated or plated steel sheet, the method comprising a step of applying a coating or plating treatment to a surface of the steel sheet annealed by the method of producing a cold-rolled steel sheet according to claim 6.

8. The method of producing a coated or plated steel sheet according to claim 7, wherein the coating or plating treatment is electrogalvanization treatment, hot-dip galvanizing treatment, or galvannealing treatment.

EP 4 624 598 A1

# FIG. 1

# FIG. 2

# FIG. 3

Induction heating device entry-side cooling device

Induction heating device entry-side cooling device

Steel sheet

Induction heating device

Induction heating device

Direction of travel

# FIG. 4

```
┌─────────────────┐    ┌─────────────────┐    ┌─────────────────┐
│Continuous anneal│    │Transformation ra│    │Material informat│
│ ing line operati│    │te information re│    │ion              │
│ng conditions    │    │sult             │    │                 │
└─────────────────┘    └─────────────────┘    └─────────────────┘
```

Continuous annealing line operating conditions | Transformation rate information result | Material information

Host computer

Material property prediction model

Mechanical property target range

Mechanical property prediction result

**Within mechanical property target range?** — Yes → Continue operations under same conditions

No

Transformation rate control model

**Within cooling device control range?** — Yes → Change cooling device cooling amount

No

**Within IH output control range?** — Yes → Change IH output

No

Change condition of other annealing apparatus

**EP 4 624 598 A1**

## INTERNATIONAL SEARCH REPORT

| | International application No. |
|---|---|
| | **PCT/JP2023/041124** |

| A. | CLASSIFICATION OF SUBJECT MATTER |
|---|---|

*C21D 9/60*(2006.01)i; *C21D 1/00*(2006.01)i; *C21D 1/26*(2006.01)i; *C21D 1/42*(2006.01)i; *C21D 11/00*(2006.01)i; *C22C 38/00*(2006.01)i; *C22C 38/60*(2006.01)i
FI:   C21D9/60 101; C21D1/00 112C; C21D1/00 119; C21D1/26 T; C21D1/42 J; C21D11/00 104; C22C38/00 301T; C22C38/00 301U; C22C38/60

According to International Patent Classification (IPC) or to both national classification and IPC

| B. | FIELDS SEARCHED |
|---|---|

Minimum documentation searched (classification system followed by classification symbols)

C21D9/60; C21D1/00; C21D1/26; C21D1/42; C21D11/00; C22C38/00; C22C38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022/209364 A1 (JFE STEEL CORPORATION) 06 October 2022 (2022-10-06) paragraphs [0020]-[0039], [0042]-[0046], [0065], claims, fig. 1 | 1-8 |
| Y | JP 2019-505686 A (ARCONIC INC.) 28 February 2019 (2019-02-28) claims, paragraphs [0033], [0038], [0046], fig. 2 | 1-8 |
| Y | JP 62-281290 A (KABUSHIKI KAISHA MEIDENSHA) 07 December 1987 (1987-12-07) claims, page 3, upper left column, line 13 to lower right column, line 5, page 4, upper left column, line 12 to upper right column, line 10, fig. 1, 2, 4 | 1-8 |
| A | JP 62-69160 A (KAWASAKI STEEL CORP.) 30 March 1987 (1987-03-30) entire text | 1-8 |
| A | WO 97/00975 A1 (NIPPON STEEL CORP.) 09 January 1997 (1997-01-09) entire text | 1-8 |

[✓] Further documents are listed in the continuation of Box C.       [✓] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2023/041124** |

**C.  DOCUMENTS CONSIDERED TO BE RELEVANT**

| Category* | Citation of document, with indication, where appropriate, of the relevant passages | Relevant to claim No. |
| --- | --- | --- |
| A | JP 2001-6860 A (SUMITOMO HEAVY INDUSTRIES LTD.) 12 January 2001 (2001-01-12) entire text | 1-8 |

Form PCT/ISA/210 (second sheet) (July 2022)

## INTERNATIONAL SEARCH REPORT
### Information on patent family members

International application No.

**PCT/JP2023/041124**

| Patent document cited in search report | | | Publication date (day/month/year) | Patent family member(s) | | | Publication date (day/month/year) |
|---|---|---|---|---|---|---|---|
| WO | 2022/209364 | A1 | 06 October 2022 | EP 4306665 A1 paragraphs [0020]-[0039], [0042]-[0046], [0065], claims, fig. 1 | | | |
| | | | | CN 117120639 | A | | |
| | | | | JP 7334861 | B2 | | |
| | | | | KR 10-2023-0151109 | A | | |
| JP | 2019-505686 | A | 28 February 2019 | US 2020/0305242 A1 fig. 2, paragraphs [0033], [0038], [0046], claims | | | |
| | | | | WO 2017/096387 | A1 | | |
| | | | | EP 3383561 | A1 | | |
| | | | | CA 3007365 | A1 | | |
| | | | | KR 10-2018-0089483 | A | | |
| | | | | CN 108778542 | A | | |
| | | | | MX 2018006811 | A | | |
| JP | 62-281290 | A | 07 December 1987 | (Family: none) | | | |
| JP | 62-69160 | A | 30 March 1987 | (Family: none) | | | |
| WO | 97/00975 | A1 | 09 January 1997 | EP 779370 A1 entire text | | | |
| | | | | BR 9508762 | A | | |
| | | | | KR 10-1997-0705648 | A | | |
| | | | | CN 1158641 | A | | |
| JP | 2001-6860 | A | 12 January 2001 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01232685 A
- JP 2001006860 A
- JP 2019179733 A
- JP 2019007907 A
- JP H0741868 A